# EUROPÄISCHE PATENTSCHRIFT

(11) **EP 3 214 223 B1**
(45) Veröffentlichungstag und Bekanntmachung des Hinweises auf die Patenterteilung: **08.05.2019**
(21) Anmeldenummer: 16158709.2
(22) Anmeldetag: 04.03.2016
(51) Int. Cl.: E01C 19/48

(54) **STRASSENFERTIGER MIT SEITLICHER BEDIENEINHEIT**
ROAD FINISHER WITH LATERAL OPERATING UNIT
FINISSEUSE DE ROUTE COMPRENANT UNE UNITE DE COMMANDE LATERALE

(43) Veröffentlichungstag der Anmeldung: 06.09.2017
(73) Patentinhaber: Joseph Vögele AG, 67067 Ludwigshafen (DE)
(72) Erfinder: BUSCHMANN, Martin, 67435 Neustadt (DE); EUL, Achim, 68305 Mannheim (DE); OETTINGER, Klaus, 68804 Altlußheim (DE)
(74) Vertreter: Grünecker Patent- und Rechtsanwälte PartG mbB

(56) Entgegenhaltungen:
- EP-A1- 2 119 831
- DE-A1-102005 040 326
- DE-U1- 9 204 559
- DE-U1- 29 609 704

## Beschreibung

Die vorliegende Erfindung betrifft einen Straßenfertiger zum Einbau eines Fahrbahnbelags.

Bekannte Straßenfertiger umfassen typischerweise einen in Einbaufahrtrichtung des Straßenfertigers vorne gelegenen Gutbunker zur Aufnahme von Einbaugut, insbesondere bituminösem Einbaugut. Zum Verdichten und Glätten des frischen Fahrbahnbelags umfasst der Straßenfertiger in Fahrtrichtung hinten eine an Zugholmen aufgehängte Einbaubohle. Zum Verdichten kann die Einbaubohle eine Verdichterleiste (Tamperleiste) mit einstellbarer Vibrationsfrequenz und einstellbarem Hub aufweisen. Zum Glätten des Fahrbahnbelags kann an der Einbaubohle ein Glättblech angebracht sein. Die Eigenschaften und die Qualität des eingebauten Fahrbahnbelags hängen von einer Reihe von Einstellungen von Arbeitskomponenten des Straßenfertigers ab, wie zum Beispiel der Tamperfrequenz, dem Tamperhub und dem Anstellwinkel der Einbaubohle. Bei bekannten Straßenfertigern befindet sich eine Bedienperson während des Einbaus in einem auf dem Straßenfertiger vorgesehenen Führerstand. Dort ist ein Hauptbedienstand mit Bedienelementen zum Steuern der Arbeitskomponenten des Straßenfertigers vorgesehen. Auch die Fahrfunktion des Straßenfertigers und nebengeordnete Funktionen, wie zum Beispiel eine Beleuchtung des Straßenfertigers lassen sich von dem Führerstand aus steuern. Damit die Bedienperson während des Einbaus einen möglichst guten Überblick über die momentane Betriebssituation hat, ist der Führerstand mit dem Hauptbedienstand für gewöhnlich an einer erhöhten Position des Chassis vorgesehen. Insbesondere kann der Führerstand mittig an dem Straßenfertiger vorgesehen sein.

Trotz der generell guten Sichtposition auf dem Führerstand kann es vorkommen, dass die Bedienperson vor dem Straßenfertiger befindliche Personen nicht bemerkt. Daher ist es aus der Praxis bekannt, seitlich am Straßenfertiger einen sogenannter TI-(Traction Isolation) Schalter vorzusehen. Eine Person, die vor hat, zum Durchführen von Arbeiten einen vor dem Straßenfertiger gelegenen Bereich zu betreten, kann den TI-Schalter betätigen, woraufhin ein Weiterfahren des Straßenfertigers unterbunden wird. Verlässt die Person den Gefahrenbereich vor dem Straßenfertiger wieder, kann sie die Fahrfunktion des Straßenfertigers durch erneutes Betätigen des TI-Schalters wieder aktivieren, so dass der Einbau fortgesetzt werden kann.

Ein Straßenfertiger nach dem Oberbegriff von Anspruch 1 ist aus der DE 92 04 559 U1 bekannt.

Es ist Aufgabe der vorliegenden Erfindung, einen Straßenfertiger in Bezug auf seine ergonomischen Eigenschaften sowie auf Arbeitssicherheit hin zu verbessern.

Diese Aufgabe wird durch den Gegenstand von Anspruch 1 gelöst. Die abhängigen Ansprüche geben vorteilhafte Ausführungsformen der Erfindung an.

Ein erfindungsgemäßer Straßenfertiger umfasst ein Chassis, einen in Einbaufahrtrichtung vorne gelegenen Gutbunker zur Aufnahme von Einbaugut und eine in Einbaufahrtrichtung hinten gelegene Einbaubohle zum Verdichten des Einbauguts. Der Straßenfertiger weist zudem einen Führerstand auf, der insbesondere einen Arbeitsplatz für eine Bedienperson bereitstellen kann. Der Führerstand kann an zentraler und/oder erhöhter Position am Straßenfertiger, insbesondere am Chassis, angeordnet sein. Um die Bedienperson vor Witterungseinflüssen zu schützen, kann der Führerstand ein Dach aufweisen. Zudem kann der Führerstand ein Geländer aufweisen, um zu verhindern, dass die Bedienperson vom Führerstand fällt. Zum Steuern von Arbeitskomponenten des Straßenfertigers, beispielsweise zum Einstellen des Tamperhubs, des Anstellwinkels der Einbaubohle oder der Höhe oder Drehgeschwindigkeit einer Verteilerschnecke, ist auf dem Führerstand ein Hauptbedienstand mit primären Bedienelementen angeordnet. Diese primären Bedienelemente sind von einer auf dem Straßenfertiger, insbesondere auf dem Führerstand, befindlichen Bedienperson bedienbar.

Erfindungsgemäß umfasst der Straßenfertiger zudem eine seitlich (bezüglich der Einbaufahrtrichtung) an dem Chassis oder dem Gutbunker vorgesehene Bedieneinheit. Die Bedieneinheit kann dabei direkt an dem Chassis oder dem Gutbunker angebracht sein. Dies ist allerdings nicht zwingend erforderlich. Beispielsweise kann die Bedieneinheit auch an einer Seitenverkleidung des Straßenfertigers angebracht sein, die an dem Chassis befestigt ist. Wichtig ist allerdings, dass die Bedieneinheit seitlich an dem Straßenfertiger vorgesehen ist. Die Bedieneinheit umfasst erfindungsgemäß eine Mehrzahl von sekundären Bedienelementen, also zumindest zwei sekundäre Bedienelemente. Die sekundären Bedienelemente können beispielsweise Eingabeelemente wie ein Schalter, eine Taste, ein Hebel, ein Touch-Screen, ein Kartenleseroder Ähnliches sein. Die sekundären Bedienelemente können aber auch andere Elemente sein, die eine Interaktion mit dem Straßenfertiger, insbesondere mit einer Steuerung des Straßenfertigers, ermöglichen. Beispielsweise können die sekundären Bedienelemente Schnittstellen für einen Datenaustausch mit dem Straßenfertiger sein. Vorteilhafterweise sind die sekundären Bedienelemente so angeordnet, dass sie von einer neben dem Straßenfertiger stehenden Bedienperson bedienbar sind.

Da die sekundären Bedienelemente seitlich am Straßenfertiger vorgesehen sind, können diese bedient werden, ohne dass der Straßenfertiger betreten werden muss. Dies kann den Arbeitsablauf auf einer Baustelle wesentlich vereinfachen, da eine Bedienperson zum Ausführen bestimmter Arbeiten nicht extra zum Betätigen eines Bedienelements auf den Führerstand des Straßenfertigers klettern muss. Insbesondere während des laufenden Einbaus ist dies nützlich, da hier ein Betreten und Verlassen des Führerstands nur schwer möglich und gefährlich sein kann. Auch zum Ausführen bestimmter Arbeiten, für die eine Aktivierung des Primärantriebsaggregates (z.B. Dieselmotor) des Straßenfertigers nicht notwendig ist, kann es vorteilhaft sein, nicht extra den Führerstand betreten zu müssen.

Nachfolgend werden einige konkrete besonders vorteilhafte Beispiele für sekundäre Bedienelemente erläutert. Diese können beliebig kombiniert (untereinander aber auch mit nicht näher spezifizierten sekundären Bedienelementen) an der Bedieneinheit vorgesehen sein.

Die Mehrzahl von sekundären Bedienelementen umfasst ein Beleuchtungs-Bedienelement, das zum Einschalten und/oder Ausschalten zumindest eines Teils einer Beleuchtung des Straßenfertigers betätigbar ist. Eine Bedienperson kann nun bereits vor dem Aufsteigen auf den Führerstand den Teil der Beleuchtung von außen einschalten. Damit wird insbesondere bei Dunkelheit der Aufstieg auf den Führerstand vereinfacht und sicherer gestaltet. Auch wenn lediglich kurz der Zustand des Straßenfertigers oder dessen Umgebung begutachtet werden soll, kann mithilfe des Beleuchtungs-Bedienelements der Teil der Beleuchtung von außen eingeschaltet und auch wieder ausgeschaltet werden, so dass der Führerstand hierzu überhaupt nicht betreten werden muss. Je nach bevorzugter Anwendung kann das Beleuchtungs-Bedienelement dazu konfiguriert sein, einen Teil der Beleuchtung des Straßenfertigers oder dessen gesamte Beleuchtung ein- und/oder auszuschalten.

Wenn die Beleuchtung des Straßenfertigers mehrere Beleuchtungselemente umfasst, kann eine Konfigurationsvorrichtung vorgesehen sein, mittels derer eingestellt werden kann, welche Beleuchtungselemente durch eine Betätigung des Beleuchtungs-Bedienelements einschaltbar und/oder ausschaltbar sind. So kann das Beleuchtungs-Bedienelement den Vorlieben eines bestimmten Benutzers oder den speziellen Erfordernissen einer bestimmten Baustelle angepasst werden.

Die Beleuchtung des Straßenfertigers umfasst eine Arbeitsbeleuchtung zum Beleuchten der Umgebung des Straßenfertigers, insbesondere eines von dem Straßenfertiger mit einer Fahrbahndecke zu versehenden Planums, eine innerhalb oder außerhalb des Führerstands vorgesehene Führerstandbeleuchtung zum Beleuchten des Führerstands und/oder eine Zugangsbeleuchtung zum Beleuchten eines Zugangsbereichs zu dem Führerstand.

Die Ausschaltfunktion des Beleuchtungs-Bedienelements erlaubt es einer Bedienperson, den Führerstand bei eingeschalteter Beleuchtung zu verlassen und die Beleuchtung erst dann durch Betätigung des Beleuchtungs-Bedienelements von außen zu deaktivieren. Erfindungsgemäß ist der Teil der Beleuchtung dazu konfiguriert, erst nach Ablauf einer vorbestimmten Zeitspanne zu erlöschen, nachdem das Beleuchtungs-Bedienelement zum Ausschalten des Teils der Beleuchtung betätigt wurde. So wird der Bedienperson nach dem Ausschalten der Beleuchtung noch eine gewisse Zeit gegeben, um sich mithilfe der Beleuchtung sicher von dem Straßenfertiger zu entfernen. Die vorbestimmte Zeitspanne kann beispielsweise zumindest 10 Sekunden, zumindest 20 Sekunden, zumindest 30 Sekunden oder mehr als 60 Sekunden betragen und/oder einstellbar sein.

Erfindungsgemäß ist das Beleuchtung-Bedienelement zum Einschalten und zum Ausschalten des Teils der Beleuchtung konfiguriert. Dies kann beispielsweise so realisiert sein, dass, wenn der Teil der Beleuchtung ausgeschaltet ist, ein Betätigen des Beleuchtungs-Bedienelements diesen einschaltet. Wenn der Teil der Beleuchtung eingeschaltet ist, kann dann eine (erneute) Betätigung des Beleuchtungs-Bedienelements diesen ausschalten. Denkbar wäre es aber auch, dass der Teil der Beleuchtung mittels des Beleuchtungs-Bedienelements lediglich ein-oder ausschaltbar ist.

Alternativ oder zusätzlich kann die Mehrzahl von sekundären Bedienelementen eine Schnittstelle zum elektronischen Datenaustausch mit dem Straßenfertiger umfassen. Dieser Datenaustausch kann unidirektional oder bidirektional sein.

Eine solche Schnittstelle kann einen Datenaustausch mit dem Straßenfertiger über drahtlose Kommunikation ermöglichen, insbesondere über drahtlose Kommunikation basierend auf dem NFC (Near Field Communication) -Standard oder Bluetooth. Besonders vorteilhaft ist es, wenn die Schnittstelle zum Empfangen von RFID (Radio Frequency Identification) -Signalen ausgelegt ist. Dies ermöglicht beispielsweise ein Identifizieren und/oder Authentifizieren einer einen RFID-Chip tragenden Bedienperson. Vorteilhafterweise werden die übrigen Funktionen der seitlich an dem Straßenfertiger vorgesehenen Bedieneinheit erst zur Benutzung freigegeben, wenn eine Authentifizierung durch einen RFID-Chip erfolgt ist, um unbefugten Zugriff zu verhindern.

Alternativ oder zusätzlich zum Ermöglichen drahtloser Kommunikation mit dem Straßenfertiger, kann die Schnittstelle ein Anschlusselement, beispielsweise einen USB-Anschluss, umfassen, das einen elektronischen Datenaustausch mit einem daran ansteckbaren Gerät, wie zum Beispiel einem USB-Stick, einem Notebook oder einem speziellen Datenauslesegerät, erlaubt. Eine Kommunikation mit einem solchen Gerät könnte aber auch drahtlos erfolgen. Vorteilhafterweise ist die Schnittstelle zum Auslesen von Betriebsdaten des Straßenfertigers verwendbar. Diese ausgelesenen Betriebsdaten können dann beispielsweise für die Baustellenplanung oder -Verwaltung verwendet werden. Es ist auch denkbar, über die Schnittstelle Betriebsdaten an den Straßenfertiger zu übermitteln. Zum Beispiel können später von einem Benutzer auswählbare Einstellparameter der Arbeitskomponenten des Straßenfertigers an den Straßenfertiger übermittelt werden. Auch eine Diagnose von Funktionen des Straßenfertigers über ein externes Gerät, insbesondere ein Notebook, kann über die Schnittstelle möglich sein.

Um den Straßenfertiger einfacher zu einer neuen Baustelle transportieren zu können, kann dieser in einen Verladezustand versetzt werden, in dem er kompakt vorliegt. Dazu kann beispielsweise ein Dach des Straßenfertigers abgeklappt werden, die Einbaubohle abgesenkt werden und/oder eine Verteilerschnecke des Straßenfertigers in eine geeignete Höhenposition, insbesondere eine obere Höhenposition, gebracht werden. Wenn es sich bei der Einbaubohle um eine Ausziehbohle mit veränderlicher Breite handelt, kann diese beim Verbringen des Straßenfertigers in den Verladezustand eingefahren werden. Beim Verbringen des Straßenfertigers in den Verladezustand kann auch der Gutbunker in einen kompakten Zustand verbracht werden, beispielsweise durch Hochklappen. Befindet sich der Gutbunker in dem kompakten Zustand, kann beim Verbringen des Straßenfertigers in den Verladezustand überprüft werden, ob eine Verriegelung des Gutbunkers in dem kompakten Zustand, beispielsweise durch eine Bunkerwandverriegelung, aktiviert ist. Gegebenenfalls kann diese aktiviert werden. Das Verbringen des Straßenfertigers in den Verladezustand kann teilweise oder vollständig automatisch erfolgen. Vorteilhafterweise umfasst dazu die Mehrzahl von sekundären Bedienelementen der seitlich an dem Straßenfertiger vorgesehenen Bedieneinheit ein Verlademodus-Bedienelement, welches zum automatischen Verbringen des Straßenfertigers in den Verladezustand betätigbar ist. Eine Sequenz zum automatischen Verbringen des Straßenfertigers in den Verladezustand kann somit einfach von einem neben dem Straßenfertiger stehenden Benutzer initiiert werden.

Nach dem Transportieren zu einer Baustelle in dem Verladezustand kann der Straßenfertiger in einen Abladezustand verbracht werden, bevor mit dem Einbau eines Fahrbahnbelags begonnen werden kann. Dazu kann das Dach des Straßenfertigers wieder hochgeklappt werden, die Einbaubohle hochgefahren werden und/oder die Verteilerschnecke in eine untere Höhenposition gebracht werden. Wenn es sich bei der Einbaubohle um eine Ausziehbohle mit veränderlicher Breite handelt, kann diese beim Verbringen des Straßenfertigers in den Abladezustand zumindest teilweise ausgefahren werden. Beim Verbringen des Straßenfertigers in den Abladezustand kann auch der Gutbunker in einen Zustand verbracht werden, in dem er zur Aufnahme von Einbaumaterial bereit ist. Das Verbringen des Straßenfertigers in den Abladezustand kann wiederum teilweise oder vollständig automatisch erfolgen. Dazu kann die Mehrzahl von sekundären Bedienelementen der seitlich an dem Straßenfertiger vorgesehenen Bedieneinheit ein Ablademodus-Bedienelement umfassen, welches zum automatischen Verbringen des Straßenfertigers in den Abladezustand betätigbar ist. Eine Sequenz zum automatischen Verbringen des Straßenfertigers in den Abladezustand kann somit einfach von einem neben dem Straßenfertiger stehenden Benutzer initiiert werden. Besonders vorteilhaft ist es allerdings, wenn für das Verbringen in den Abladezustand kein separates sekundäres Bedienelement vorgesehen ist, sondern eine Betätigung des Verlademodus-Bedienelements ein automatisches Verbringen des Straßenfertigers in den Abladezustand auslöst, wenn der Straßenfertiger bei der Betätigung bereits im Verladezustand befindlich ist.

Vorteilhafterweise ist das automatische Verbringen des Straßenfertigers in den Verladezustand oder den Abladezustand auch bei deaktiviertem Primärantriebsaggregat (z.B. Dieselmotor) des Straßenfertigers möglich. In diesem Fall können die entsprechenden Funktionen mittels elektrischer Energie aus einem Energiespeicher, insbesondere aus einer Batterie, durchgeführt werden. Es ist auch denkbar, dass andere von sekundären Bedienelementen unterstützte Funktionen, die zum Beispiel das Einschalten einer Beleuchtung, bei deaktiviertem Primärantriebsaggregat möglich sind.

Die Mehrzahl von sekundären Bedienelementen kann zusätzlich oder alternativ ein TI (Traction Isolation) -Bedienelement, insbesondere einen TI-Schalter umfassen, das zum Unterbinden einer Fahrfunktion des Straßenfertigers betätigbar ist. Das TI-Bedienelement kann nach einer Betätigung zum Unterbinden der Fahrfunktion des Straßenfertigers zum Wiederherstellen der Fahrfunktion betätigbar sein. Das Integrieren eines TI-Bedienelements in die seitlich an dem Straßenfertiger vorgesehene Bedieneinheit ist bezüglich der Herstellung des Straßenfertigers besonders effizient. So können beispielsweise zu der Bedieneinheit führende Kabelführungen sowohl für das Anschließen des TI-Bedienelements als auch für das zumindest eine übrige sekundäre Bedienelement genutzt werden.

Die sekundären Bedienelemente können mit einer Steuerung des Straßenfertigers verbunden sein, die zum Bereitstellen der entsprechenden Funktionen der sekundären Bedienelemente konfiguriert ist.

Die Bedieneinheit kann eine Buchse zum Laden von akkubetriebenen externen Geräten umfassen, so dass diese am Straßenfertiger geladen werden können.

Optional kann an dem Chassis eine Trittvorrichtung mit einer Trittfläche vorgesehen sein, die einen Standplatz an der seitlich an dem Staßenfertiger vorgesehenen Bedieneinheit für eine die sekundären Bedienelemente bedienende Person bereitstellt.

Im Folgenden soll die Erfindung anhand von Ausführungsbeispielen mithilfe der beigefügten Figuren weiter erläutert werden. Dabei zeigen:
- Figur 1: eine schematische Darstellung eines Straßenfertigers gemäß einer Ausführungsform mit einer an einer Seitenverkleidung des Straßenfertigers vorgesehenen Bedieneinheit;
- Figur 2: eine schematische Darstellung eines Straßenfertigers gemäß einer Ausführungsform mit einer seitlich an dem Gutbunker angebrachten Bedieneinheit, wobei aus Gründen der Übersichtlichkeit die Einbaubohle nicht dargestellt ist; und
- Figur 3: eine schematische Draufsicht auf eine Bedieneinheit eines Straßenfertigers gemäß einer Ausführungsform.

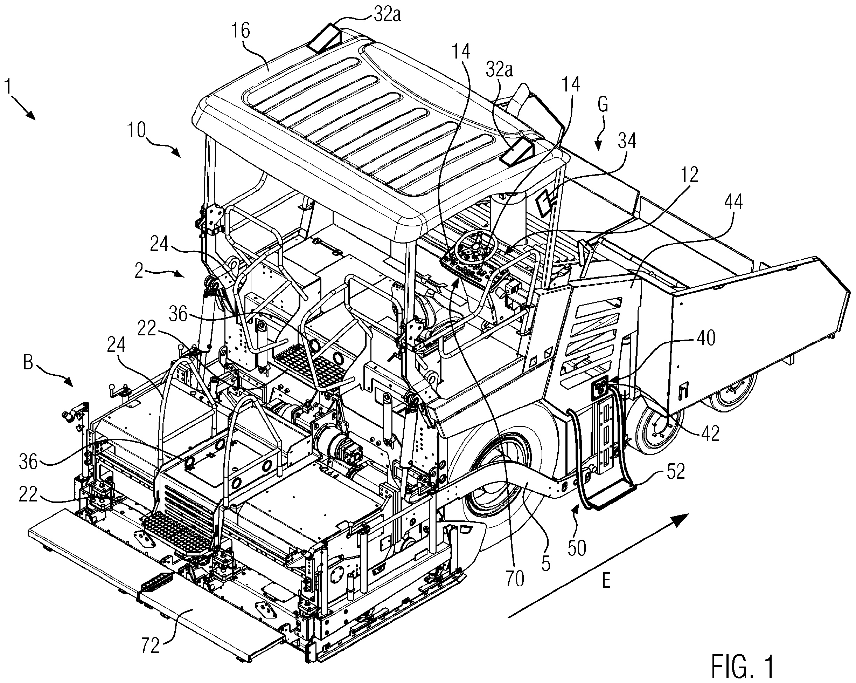

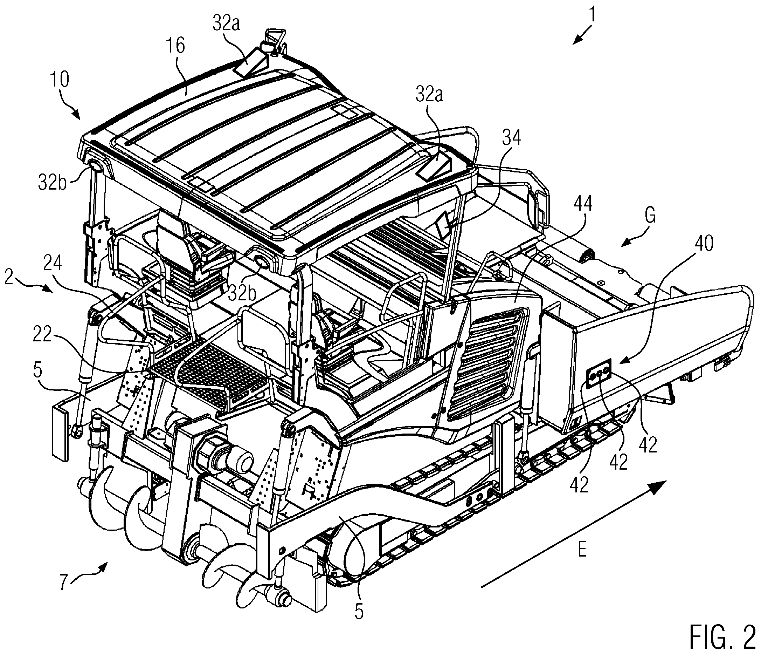

Die Figuren 1 und 2 zeigen jeweils eine Ausführungsform eines erfindungsgemäßen Straßenfertigers 1. In Einbaufahrtrichtung E vorne ist dabei jeweils ein Gutbunker G zur Aufnahme von Einbaugut vorgesehen. Bezüglich der Einbaufahrtrichtung E hinten ist eine Einbaubohle B zum Verdichten des Einbauguts vorgesehen. Vorzugsweise wird die Einbaubohle B mit an einem Chassis 2 des Straßenfertigers 1 angelenkten Zugholmen 5 hinter dem Chassis 2 hergezogen. Bei einem Einbauvorgang wird das Einbaugut von dem Gutbunker G entgegen der Einbaufahrtrichtung E über geeignete Fördereinrichtungen, wie beispielsweise ein Kratzerband, an eine hintere Seite des Straßenfertigers 1 verbracht, wo es vorzugsweise mittels einer Verteilerschnecke 7 quer zur Einbaufahrrichtung E verteilt und der Einbaubohle B vorgelegt wird. In Figur 2 ist die Einbaubohle B nicht dargestellt, so dass die Verteilerschnecke 7 sichtbar wird.

Auf dem Chassis 2 des Straßenfertigers 1 ist ein Führerstand 10 vorgesehen, der einen Arbeitsplatz für eine Bedienperson des Straßenfertigers 1 umfasst. Zum Steuern von Arbeitskomponenten des Straßenfertigers 1, wie zum Beispiel der Einbaubohle B, der Verteilerschnecke 7 oder des Kratzerbands, ist auf dem Führerstand 10 ein Hauptbedienstand 12 mit primären Bedienelementen 14 vorgesehen (in Figur 2 nicht dargestellt). Die primären Bedienelemente 14 sind von einer sich auf dem Straßenfertiger 1 befindlichen Bedienperson bedienbar. Der Führerstand 10 kann zum Schutz der Bedienperson vor Witterungseinflüssen oder herabfallenden Gegenständen ein Dach 16 umfassen. In den gezeigten Ausführungsformen ist ein Zugang zu dem Führerstand 10 von hinten über die Einbaubohle B möglich. Dazu sind den Zugang erleichternde Vorrichtungen, insbesondere Trittgitter 22 und Geländer 24 vorgesehen.

Der Straßenfertiger 1 weist eine mehrere Beleuchtungselemente umfassende Beleuchtung 32, 34, 36 auf, die eine Arbeitsbeleuchtung 32 zum Beleuchten der Umgebung des Straßenfertigers 1 aufweisen, die insbesondere Frontscheinwerfer 32a und/oder Rückscheinwerfer 32b (siehe Figur 2) umfassen kann. Zudem kann eine Führerstandsbeleuchtung 34 zum Beleuchten des Führerstands 10 vorgesehen sein. Um einen Zugang zu dem Führerstand 10 bei Dunkelheit zu erleichtern, kann ein Zugangsbereich zu dem Führerstand 10 mittels einer Zugangsbeleuchtung 36 beleuchtet werden. Dabei kann es sich beispielsweise um in dem Zugangsbereich versenkte Lampen handeln.

Erfindungsgemäß ist seitlich an dem Chassis 2 oder dem Gutbunker B eine Bedieneinheit 40 mit einer Mehrzahl von sekundären Bedienelementen 42 vorgesehen. Die sekundären Bedienelemente 42 können von einer neben dem Straßenfertiger 1 stehenden Bedienperson bedient werden. In der in Figur 1 gezeigten Ausführungsform ist die Bedieneinheit 40 seitlich an dem Chassis 2 vorgesehen. Prinzipiell wäre es denkbar, die Bedieneinheit 40 dazu direkt an dem Chassis 2 anzubringen. In der gezeigten Ausführungsform ist die Bedieneinheit 40 allerdings an einer Seitenverkleidung 44 angebracht und mittels dieser seitlich an dem Chassis 2 vorgesehen. In der in Figur 2 gezeigten Ausführungsform ist die Bedieneinheit 40 seitlich an dem Gutbunker G vorgesehen.

In der in Figur 1 gezeigten Ausführungsform ist eine Trittvorrichtung 50 mit einer Trittfläche 52, die einen Standplatz für eine Bedienperson zum Bedienen der sekundären Bedienelemente 42 bereitstellt, an dem Chassis 2 vorgesehen. Eine solche Trittvorrichtung 50 kann genutzt werden, um beim Bedienen der sekundären Bedienelemente 42 während einer Einbaufahrt kurzzeitig mit dem Straßenfertiger 1 mitzufahren. Für einige Anwendungen kann sich eine solche Trittvorrichtung 50 aber auch als störend erweisen und kann weggelassen werden.

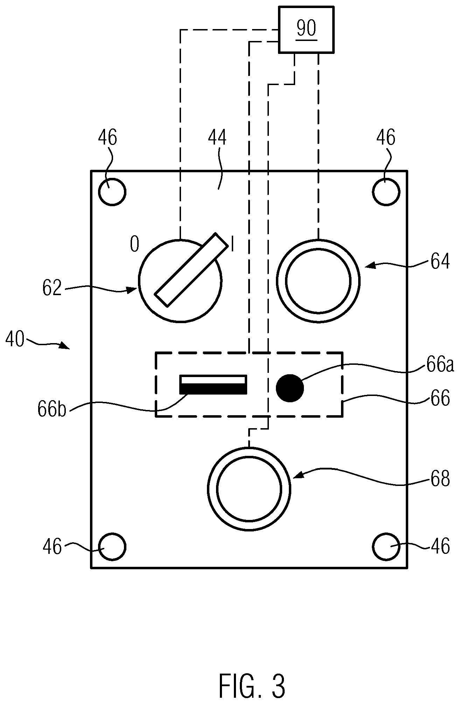

In Figur 3 ist eine mögliche Ausgestaltung der Bedieneinheit 40 mit mehreren sekundären Bedienelementen 42 detaillierter dargestellt. Die Bedieneinheit 40 kann eine Blende 44 umfassen, die an dem Straßenfertiger 1 angebracht ist und die sekundären Bedienelemente 42 aufnimmt. Insbesondere kann die Blende 44 Befestigungsmerkmale 46, wie zum Beispiel Schraublöcher, zum Befestigen der Bedieneinheit 40 an dem Straßenfertiger 1 umfassen. In der gezeigten Ausführungsform umfasst die Mehrzahl von sekundären Bedienelementen 42 der Bedieneinheit 40 ein TI-Bedienelement 62, ein Beleuchtungs-Bedienelement 64, eine Schnittstelle 66 für einen Datenaustausch mit dem Straßenfertiger 1 und ein Transportmodus-Bedienelement 68. Es könnten aber auch eines oder mehrere der sekundären Bedienelemente 42 weggelassen oder durch andere sekundäre Bedienelemente 42 ersetzt werden, solange zumindest zwei sekundäre Bedienelemente 42 vorhanden sind. Auch das Hinzufügen weiterer sekundärer Bedienelemente 42 ist denkbar.

Die sekundären Bedienelemente 42 können mit einer schematisch in Figur 3 dargestellten Steuerung 90 des Straßenfertigers 1 verbunden sein, die zum Bereitstellen entsprechender Funktionen der sekundären Bedienelemente 42 konfiguriert ist.

Das TI-Bedienelement 62 ist in der gezeigten Ausführungsform als zwischen zwei Betriebspositionen betätigbarer Drehschalter ausgebildet. Wenn eine Person in einem Bereich vor dem Straßenfertiger 1 Arbeiten durchführen will, kann sie mittels des TI-Bedienelements 62 die Fahrfunktion des Straßenfertigers 1 unterbinden (beispielsweise durch Verbringen des Drehschalters in eine aktive Position ("I"). Unabhängig von anderweitigen Benutzereingaben, beispielsweise auf dem Führerstand 10 getätigten Benutzereingaben, wird der Straßenfertiger 1 dann gestoppt und kann nicht mehr weiterfahren, bevor das TI-Bedienelement 62 zum Wiederherstellen der Fahrfunktion des Straßenfertigers 1, beispielsweise durch Zurückdrehen des Drehschalters in die deaktivierte Position ("O"), erneut betätigt wurde.

Das Beleuchtungs-Bedienelement 64 ist in der gezeigten Ausführungsform als Druckknopf ausgebildet und wird zum Einschalten oder Ausschalten zumindest eines ersten Teils der Beleuchtung 32, 34, 36 des Straßenfertigers 1 betätigt. Ist der erste Teil der Beleuchtung 32, 34, 36 ausgeschaltet, kann ein Betätigen des Beleuchtungs-Bedienelements 64 diesen einschalten. Ist der erste Teil der Beleuchtung eingeschaltet 32, 34, 36, kann eine Betätigung des Beleuchtungs-Bedienelements 64 diesen ausschalten. Beispielsweise kann bei einer Betätigung des Beleuchtungs-Bedienelements 64 die Arbeitsbeleuchtung 32, die Führerstandsbeleuchtung 34 und/oder die Zugangsbeleuchtung 36 des Straßenfertigers 1 ein-oder ausgeschaltet werden. Der Straßenfertiger kann eine Konfigurationsvorrichtung 70 umfassen, die es erlaubt, einzustellen, welche Beleuchtungselemente durch das Beleuchtungs-Bedienelement 64 einschaltet und ausgeschaltet werden können. Die Konfigurationsvorrichtung 70 kann beispielsweise am Hauptbedienstand 12 auf dem Führerstand 10 vorgesehen sein, da die Konfiguration des Beleuchtungs-Bedienelements 64 normalerweise nicht allzu oft geändert werden muss. Es wäre aber auch denkbar die Konfigurationsvorrichtung 70 einfacher zugänglich ebenfalls an der seitlich an dem Straßenfertiger 1 vorgesehenen Bedieneinheit 40 vorzusehen.

Die gezeigte Schnittstelle 66 für einen Datenaustausch mit dem Straßenfertiger 1 umfasst einen Sender und/oder Empfänger 66a der eine drahtlose Kommunikation mit dem Straßenfertiger 1 ermöglicht. Die drahtlose Kommunikation kann insbesondere über NFC oder Bluetooth erfolgen. Eine mögliche Anwendung ist es, durch einen Empfänger 66a ein Signal eines RFID-Chips auszulesen und so einen Benutzer zu authentifizieren und erst dann die übrigen Funktionen der Bedieneinheit 40 freizugeben. Die gezeigte Schnittstelle 66 umfasst zudem ein Anschlusselement 66b, in der gezeigten Ausführungsform einen USB-Anschluss, das einen elektronischen Datenaustausch zwischen dem Straßenfertiger 1 und einem an dem Anschlusselement 66b ansteckbaren Gerät ermöglicht. Diese Funktionalität kann beispielsweise zum Auslesen von Betriebsdaten aus dem Straßenfertiger 1 oder zum Anschluss eines Geräts für eine Diagnose von Funktionen des Straßenfertigers 1 genutzt werden. Es wäre auch möglich, dass die Schnittstelle 66 lediglich entweder den Sender und/oder Empfänger 66a oder das Anschlusselement 66b umfasst oder weitere Sender und/oder Empfänger 66a und/oder Anschlusselemente 66b vorgesehen sind.

Das Anschlusselement 66b kann vorteilhafterweise zudem als Buchse zum Laden von akkubetriebenen externen Geräten verwendet werden. Es wäre aber auch denkbar, dass die Bedieneinheit 40 eine separate Buchse zum Laden von akkubetriebenen externen Geräten umfasst. Dabei kann die spezielle Art der Buchse bedarfsgemäß ausgewählt werden.

Das Verlademodus-Bedienelement 68 kann betätigt werden, um den Straßenfertiger 1 automatisch in einen Verladezustand zu verbringen. Dazu kann bei Betätigung des Verlademodus-Bedienelements 68 beispielsweise das Dach 16 des Straßenfertigers 1 abgeklappt oder zusammengeklappt werden. Alternativ oder zusätzlich kann die Einbaubohle B abgesenkt werden. Alternativ oder zusätzlich kann bei einer Betätigung des Verlademodus-Bedienelements 68 eine Höhenposition der Verteilerschnecke 7 des Straßenfertigers 1 verändert werden. Insbesondere kann die Verteilerschnecke 7 an eine obere Position gefahren werden.

Vorteilhafterweise ist das Verlademodus-Bedienelement 68 derart konfiguriert, dass es zum automatischen Verbringen des Straßenfertigers 1 in einen Abladezustand betätigar ist, wenn sich der Straßenfertiger 1 bereits in dem Verladezustand befindet. So kann der Straßenfertiger 1 nach dem Transportieren auf eine neue Baustelle schnell und einfach wieder einsatzfähig gemacht werden.

## Patentansprüche

1. Straßenfertiger (1) mit
einem Chassis (2);
einem in Einbaufahrtrichtung (E) des Straßenfertigers (1) vorne gelegenen Gutbunker (G) zur Aufnahme von Einbaugut;
einer in Einbaufahrtrichtung (E) des Straßenfertigers (1) hinten gelegenen Einbaubohle (B) zum Verdichten von Einbaugut;
einem auf einem Führerstand (10) des Straßenfertigers (1) angeordneten Hauptbedienstand (12) mit primären Bedienelementen (14) zum Steuern von Arbeitskomponenten des Straßenfertigers (1), wobei die primären Bedienelemente (14) von einer auf dem Straßenfertiger (1) befindlichen Bedienperson bedienbar sind;
einer Beleuchtung, die eine Arbeitsbeleuchtung (32a, 32b) zum Beleuchten der Umgebung des Straßenfertigers (1), eine Führerstandbeleuchtung (34) zum Beleuchten des Führerstands (10) und/oder eine Zugangsbeleuchtung (36) zum Beleuchten eines Zugangsbereichs zu dem Führerstand (10) umfasst; und
einer seitlich an dem Chassis (2) oder dem Gutbunker (G) vorgesehenen Bedieneinheit (40) mit einer Mehrzahl von sekundären Bedienelementen (42),
**dadurch gekennzeichnet, dass**
die Mehrzahl von sekundären Bedienelementen (42) ein Beleuchtungs-Bedienelement (64) umfasst, das zum Einschalten und zum Ausschalten zumindest eines Teils der Beleuchtung betätigbar ist; und
der Teil der Beleuchtung dazu konfiguriert ist, nach einer Betätigung des Beleuchtungs-Bedienelements (64) zum Ausschalten des Teils der Beleuchtung nach Ablauf einer vorbestimmten Zeitspanne zu erlöschen.

2. Straßenfertiger nach Anspruch 1, wobei die Beleuchtung mehrere Beleuchtungselemente (32a, 32b, 34, 36) umfasst und eine Konfigurationsvorrichtung (70) vorgesehen ist, die es erlaubt, einzustellen, welche Beleuchtungselemente (32a, 32b, 34, 36) durch eine Betätigung des Beleuchtungs-Bedienelements (64) einschaltbar und/oder ausschaltbar sind.

3. Straßenfertiger nach einem der vorangehenden Ansprüche, wobei die vorbestimmte Zeitspanne zumindest 10 Sekunden beträgt und/oder einstellbar ist.

4. Straßenfertiger nach einem der vorangehenden Ansprüche, wobei die Mehrzahl von sekundären Bedienelementen (42) eine Schnittstelle (66) zum elektronischen Datenaustausch mit dem Straßenfertiger (1) umfasst.

5. Straßenfertiger nach Anspruch 4, wobei die Schnittstelle (66) für einen Datenaustausch mit dem Straßenfertiger (1) durch drahtlose Kommunikation, insbesondere basierend auf RFID, NFC oder Bluetooth, konfiguriert ist.

6. Straßenfertiger nach Anspruch 4 oder 5, wobei die Schnittstelle (66) ein Anschlusselement (66b) umfasst, das einen elektronischen Datenaustausch mit einem daran ansteckbaren Gerät ermöglicht.

7. Straßenfertiger nach einem der Ansprüche 4 bis 6, wobei die Schnittstelle (66) zum Auslesen von Betriebsdaten des Straßenfertigers (1), zum Übermitteln von Betriebsdaten an den Straßenfertiger (1), zum Durchführen einer Diagnose von Funktionen des Straßenfertigers (1) oder zum Übermitteln von benutzerspezifischen Daten, insbesondere zur Authentifizierung des Benutzers, an den Straßenfertiger (1) verwendbar ist.

8. Straßenfertiger nach einem der vorangehenden Ansprüche, wobei die Mehrzahl von sekundären Bedienelementen (42) ein Verlademodus-Bedienelement (68) umfasst, das zum automatischen Verbringen des Straßenfertigers (1) in einen Verladezustand betätigbar ist.

9. Straßenfertiger nach Anspruch 8, wobei das automatische Verbringen des Straßenfertigers (1) in den Verladezustand ein Abklappen eines Daches (16) des Straßenfertigers (1), ein Absenken der Einbaubohle (B), ein Verändern der Höhenposition einer Verteilerschnecke (7) des Straßenfertigers (1) und/oder ein Überprüfen, ob eine Bunkerwandverriegelung aktiviert ist, und gegebenenfalls ein Aktivieren der Bunkerwandverriegelung umfasst.

10. Straßenfertiger nach Anspruch 8 oder 9, wobei das Verlademodus-Bedienelement (68) zum automatischen Verbringen des Straßenfertigers (1) in einen Abladezustand betätigbar ist, wenn sich der Straßenfertiger (1) in dem Verladezustand befindet.

11. Straßenfertiger nach einem der vorangehenden Ansprüche, wobei die Mehrzahl von sekundären Bedienelementen (42) ein TI-Bedienelement (62) umfasst, das zum Unterbinden einer Fahrfunktion des Straßenfertigers (1) betätigbar ist.

12. Straßenfertiger nach Anspruch 11, wobei das TI-Bedienelement (62) nach einer Betätigung zum Unterbinden der Fahrfunktion des Straßenfertigers (1) zum Wiederherstellen der Fahrfunktion des Straßenfertigers (1) betätigbar ist.

13. Straßenfertiger nach einem der vorangehenden Ansprüche, wobei die sekundären Bedienelemente (42) so angeordnet sind, dass sie von einer neben dem Straßenfertiger (1) stehenden Bedienperson bedienbar sind.

14. Straßenfertiger nach einem der vorangehenden Ansprüche, wobei die Bedieneinheit (40) eine Buchse zum Laden von akkubetriebenen externen Geräten umfasst.

15. Straßenfertiger nach einem der vorangehenden Ansprüche, wobei an dem Chassis (2) eine Trittvorrichtung (50) mit einer Trittfläche (52) vorgesehen ist, die einen Standplatz für eine Bedienperson zum Bedienen der sekundären Bedienelemente (42) bereitstellt.

## Claims

1. Road finishing machine (1), having
a chassis (2);
a material bunker (G) for receiving paving material located at the front in the paving direction (E) of the road finishing machine (1);
a screed (B) for compacting paving material located at the rear in the paving direction (E) of the road finishing machine (1);
a main control platform (12) arranged on a driver stand (10) of the road finishing machine (1) with primary operational controls (14) for controlling working components of the road finishing machine (1), wherein the primary operational controls (14) may be operated by an operator located on the road finishing machine (1);
a lighting comprising a working lighting (32a, 32b) for illuminating the surrounding area of the road finishing machine (1), a driver stand lighting (34) for illuminating the driver stand (10) and/or an access lighting (36) for illuminating an access area to the driver stand (10); and
an operation unit (40) with a plurality of secondary operational controls (42) provided laterally at the chassis (2) or the material bunker (G),
**characterized in that**
the plurality of secondary operational controls (42) comprises an operational lighting control (64) which may be actuated for switching on and for switching off at least part of the lighting; and
the part of the lighting is configured to go out after lapse of a predetermined period of time after the actuation of the operational lighting control (64) for switching off the part of the lighting.

2. Road finishing machine according to claim 1, wherein the lighting comprises several lighting elements (32a, 32b, 34, 36) and a configuration device (70) is provided which permits to control which lighting elements (32a, 32b, 34, 36) may be switched on and/or switched off by actuating the operational lighting control (64).

3. Road finishing machine according to one of the preceding claims, wherein the predetermined period of time is 10 seconds and/or is adjustable.

4. Road finishing machine according to one of the preceding claims, wherein the plurality of secondary operational controls (42) comprises an interface (66) for electronic data exchange with the road finishing machine (1).

5. Road finishing machine according to claim 4, wherein the interface (66) is configured for data exchange with the road finishing machine (1) by wireless communication, in particular based on RFID, NFC or Bluetooth.

6. Road finishing machine according to claim 4 or 5, wherein the interface (66) comprises a terminal element (66b) which permits electronic data exchange with a unit that may be plugged into it.

7. Road finishing machine according to one of claims 4 to 6, wherein the interface (66) may be used for reading out operational data of the road finishing machine (1), for transmitting operational data to the road finishing machine (1), for performing a diagnosis of functions of the road finishing machine (1), or for transmitting user-specific data to the road finishing machine (1), in particular for authenticating the user.

8. Road finishing machine according to one of the preceding claims, wherein the plurality of secondary operational controls (42) comprises an operational loading mode control (68) which may be actuated for automatically transferring the road finishing machine (1) into a loading state.

9. Road finishing machine according to claim 8, wherein the automatic transferring of the road finishing machine (1) into the loading state comprises folding down a roof (16) of the road finishing machine (1), lowering the screed (B), changing the height position of a spreading auger (7) of the road finishing machine (1), and/or checking, whether a bunker wall locking mechanism is activated, and if necessary activating the bunker wall locking mechanism.

10. Road finishing machine according to claim 8 or 9, wherein the operational loading mode control (68) may be actuated for automatically transferring the road finishing machine (1) into an unloading state when the road finishing machine (1) is in its loading state.

11. Road finishing machine according to one of the preceding claims, wherein the plurality of secondary operational controls (42) comprises an operational TI control (62) which may be actuated for prohibiting a driving function of the road finishing machine (1).

12. Road finishing machine according to claim 11, wherein the operational TI control (62) may be actuated, after an actuation for prohibiting the driving function of the road finishing machine (1), for restoring the driving function of the road finishing machine (1).

13. Road finishing machine according to one of the preceding claims, wherein the secondary operational controls (42) are arranged such that they may be operated by an operator standing next to the road finishing machine (1).

14. Road finishing machine according to one of the preceding claims, wherein the operation unit (40) comprises a port for loading accumulator-driven external devices.

15. Road finishing machine according to one of the preceding claims, wherein a tread device (50) with a tread surface (52) is provided at the chassis (2) which provides a stand for an operator for operating the secondary operational controls (42).

## Revendications

1. Finisseur de route (1) comprenant :
un châssis (2) ;
une trémie à matériau de revêtement (G) destinée à recevoir le matériau de revêtement à poser et se situant à l'avant en se référant à la direction de marche de pose du revêtement (E) du finisseur de route (1) ;
une table lisseuse de pose de revêtement (B) destinée à compacter du matériau de revêtement et située à l'arrière en se référant à la direction de marche de pose du revêtement (E) du finisseur de route (1) ;
un pupitre de commande principal (12) agencé dans un poste de conduite (10) du finisseur de route (1) et comportant des éléments de commande primaires (14) destinés à commander des composants de travail du finisseur de route (1), les éléments de commande primaires (14) pouvant être actionnés par une personne de service se trouvant sur le finisseur de route (1) ;
un système d'éclairage, qui comprend un éclairage de travail (32a, 32b) pour éclairer l'environnement du finisseur de route (1), un éclairage de poste de conduite (34) pour éclairer le poste de conduite (10), et/ou un éclairage d'accès (36) pour éclairer une zone d'accès au poste de conduite (10) ; et
une unité de commande (40) prévue latéralement sur le châssis (2) ou la trémie à matériaux de revêtement (G) et comprenant une pluralité d'éléments de commande secondaires (42),
**caractérisé en ce que**
la pluralité d'éléments de commande secondaires (42) comprend un élément de commande d'éclairage (64), qui peut être actionné pour la mise en marche et pour l'arrêt d'au moins une partie du système d'éclairage ; et
ladite partie du système d'éclairage est configurée pour s'éteindre seulement après écoulement d'un intervalle de temps prédéterminé, après un actionnement de l'élément de commande d'éclairage (64) pour arrêter la partie du système d'éclairage.

2. Finisseur de route selon la revendication 1, dans lequel le système d'éclairage comprend plusieurs éléments d'éclairage (32a, 32b, 34, 36), et dans lequel il est prévu un dispositif de configuration (70), qui permet de sélectionner lesquels parmi les éléments d'éclairage (32a, 32b, 34, 36) peuvent être mis en marche et/ou arrêtés par un actionnement de l'élément de commande d'éclairage (64).

3. Finisseur de route selon l'une des revendications précédentes, dans lequel ledit intervalle de temps prédéterminé vaut au moins 10 secondes et/ou peut être réglé.

4. Finisseur de route selon l'une des revendications précédentes, dans lequel la pluralité d'éléments de commande secondaires (42) comprend une interface (66) pour l'échange de données électronique avec le finisseur de route (1).

5. Finisseur de route selon la revendication 4, dans lequel l'interface (66) est configurée pour un échange de données avec le finisseur de route (1) par communication sans fil, notamment par une communication selon un standard RFID, NFC ou Bluetooth.

6. Finisseur de route selon la revendication 4 ou la revendication 5, dans lequel l'interface (66) comporte un élément de raccordement (66b), qui permet un échange de données électronique avec un appareil qui peut y être raccordé.

7. Finisseur de route selon l'une des revendications 4 à 6, dans lequel l'interface (66) peut être utilisée pour la lecture de données de fonctionnement du finisseur de route (1), pour la transmission de données de fonctionnement au finisseur de route (1), pour effectuer un diagnostic de fonctions du finisseur de route (1), ou bien pour la transmission au finisseur de route (1), de données spécifiques à l'utilisateur, notamment pour l'authentification de l'utilisateur.

8. Finisseur de route selon l'une des revendications précédentes, dans lequel la pluralité d'éléments de commande secondaires (42) comprend un élément de commande de mode de chargement de transport (68), qui peut être actionné pour amener automatiquement le finisseur de route (1) dans un état de chargement de transport.

9. Finisseur de route selon la revendication 8, dans lequel l'amenée automatique du finisseur de route (1) dans l'état de chargement de transport, comprend le rabattement d'un toit (16) du finisseur de route (1), un abaissement de la table lisseuse de pose de revêtement (B), une modification de la position de hauteur d'une vis sans fin de répartition (7) du finisseur de route (1), et/ou une vérification de l'activation d'un verrouillage de paroi de trémie, et, le cas échéant, l'activation du verrouillage de paroi de trémie.

10. Finisseur de route selon la revendication 8 ou la revendication 9, dans lequel l'élément de commande de mode de chargement de transport (68) peut être actionné pour amener automatiquement le finisseur de route (1) dans un état de déchargement, lorsque le finisseur de route (1) se trouve dans l'état de chargement de transport.

11. Finisseur de route selon l'une des revendications précédentes, dans lequel la pluralité d'éléments de commande secondaires (42) comprend un élément de commande TI (d'isolation de traction) (62), qui peut être actionné pour interdire une fonction de marche de déplacement du finisseur de route (1).

12. Finisseur de route selon la revendication 11, dans lequel l'élément de commande TI (62) pour interdire la fonction de marche de déplacement du finisseur de route (1), peut être actionné pour rétablir la fonction de marche de déplacement du finisseur de route (1).

13. Finisseur de route selon l'une des revendications précédentes, dans lequel les éléments de commande secondaires (42) sont agencés de manière à pouvoir être manipulés par une personne de service debout à côté du finisseur de route (1).

14. Finisseur de route selon l'une des revendications précédentes, dans lequel l'unité de commande (40) comporte une prise pour assurer la charge d'appareillages externes fonctionnant sur batterie.

15. Finisseur de route selon l'une des revendications précédentes, dans lequel il est prévu sur le châssis (2), un dispositif de marchepied (50) avec une surface de marchepied (52), qui forme un emplacement pour une personne de service en vue de manoeuvrer les éléments de commande secondaires (42).
